# EUROPÄISCHE PATENTSCHRIFT

(11) **EP 3 022 077 B1**
(45) Veröffentlichungstag und Bekanntmachung des Hinweises auf die Patenterteilung: **06.11.2019**
(21) Anmeldenummer: 14730082.6
(22) Anmeldetag: 12.06.2014
(51) Int. Cl.: B60K 1/04, B60K 11/02, B60K 1/00, H01M 10/625, H01M 2/10, H01M 10/613, H01M 10/617, H01M 10/6556

(54) **AUFNAHMEVORRICHTUNG ZUR AUFNAHME WENIGSTENS EINER ENERGIESPEICHERKOMPONENTE**
RECEIVING DEVICE FOR RECEIVING AT LEAST ONE ENERGY STORAGE COMPONENT
DISPOSITIF DE RÉCEPTION POUR RECEVOIR AU MOINS UN COMPOSANT DE STOCKAGE D'ÉNÉRGIE

(30) Priorität: 16.07.2013 DE 102013011895
(43) Veröffentlichungstag der Anmeldung: 25.05.2016
(73) Patentinhaber: Audi AG, 85045 Ingolstadt (DE)
(72) Erfinder: ENNING, Norbert, 85095 Denkendorf (DE); GUYOT, Bastian, 85051 Ingolstadt (DE)
(74) Vertreter: Lehle, Josef
(86) Internationale Anmeldenummer: PCT/EP2014/001599
(87) Internationale Veröffentlichungsnummer: WO 2015/007360

(56) Entgegenhaltungen:
- EP-A1- 0 933 830
- WO-A2-2012/160573
- DE-A1-102008 034 885
- DE-A1-102008 059 955
- US-A1- 2012 312 614

## Beschreibung

Die Erfindung betrifft eine Aufnahmevorrichtung zur Aufnahme wenigstens einer Energiespeicherkomponente, umfassend wenigstens ein einen Aufnahmeraum zur Aufnahme der Energiespeicherkomponente zumindest abschnittsweise begrenzendes Aufnahmeteil.

Entsprechende Aufnahmevorrichtungen für elektrische Energiespeicher sind bekannt und dienen allgemein der Aufnahme respektive Lagerung von Energiespeicherkomponenten, wie beispielsweise Energiespeicherzellen oder mit diesen elektrisch zu verbindenden oder verbundenen elektrischen oder elektronischen Komponenten, wie z. B. Lade- oder Steuerelektroniken. Hierfür weisen entsprechende Aufnahmevorrichtungen typischerweise ein einen Aufnahmeraum zur Aufnahme der Energiespeicherkomponenten begrenzendes Aufnahmeteil auf.

Bekanntermaßen entsteht im Betrieb entsprechender Energiespeicherkomponenten Wärme, welche aus den Energiespeicherkomponenten sowie der diese aufnehmenden Aufnahmevorrichtung abgeführt werden muss, um ein Überhitzen und eine daraus gegebenenfalls folgende Schädigung der Energiespeicherkomponenten, der Aufnahmevorrichtung sowie gegebenenfalls weiterer mit dieser in einer konkreten Anwendung verbauter Komponenten zu verhindern.

Die Verwendung separater, an entsprechende Aufnahmevorrichtungen anzuschließender Kühleinrichtungen bietet die Möglichkeit einer Kühlung bzw. Temperierung entsprechender Energiespeicherkomponenten respektive Aufnahmevorrichtungen. Nachteilhaft sind derartige Kühleinrichtungen jedoch insbesondere im Hinblick auf den von diesen beanspruchten Bauraum.

Aufnahmevorrichtungen zur Aufnahme wenigstens einer Energiespeicherkomponente sind z.B. aus der US 2012/312614 A1, EP 0 933 830 A1 und WO 2012/160573 A2 bekannt.

Der Erfindung liegt damit die Aufgabe zugrunde, eine demgegenüber verbesserte Aufnahmevorrichtung zur Aufnahme wenigstens einer Energiespeicherkomponente anzugeben.

Die Aufgabe wird erfindungsgemäß durch eine Aufnahmevorrichtung mit den Merkmalen des Anspruchs 1 gelöst.

Die erfindungsgemäße Aufnahmevorrichtung zeichnet sich demnach dadurch aus, dass das den Aufnahmeraum zumindest abschnittsweise begrenzende Aufnahmeteil derart konzipiert bzw. gestaltet ist, dass in dessen Oberfläche eine einen oder mehrere Kühlmittelkanäle umfassende Kühlmittelkanalstruktur ausgebildet ist. Die sonach in das Aufnahmeteil integrierte bzw. durch das Aufnahmeteil selbst gebildete Kühlmittelkanalstruktur bietet die Möglichkeit, ein Kühlmittel, d. h. z. B. ein flüssiges oder gasförmiges Fluid, in konzertierter Weise entlang der Oberfläche des Aufnahmeteils strömen bzw. zirkulieren zu lassen. Der bzw. die von der Kühlmittelkanalstruktur umfasste Kühlmittelkanal bzw. die Kühlmittelkanäle ist bzw. sind typischerweise derart angeordnet, dass das Kühlmittel kreislaufartig entlang der Oberfläche des Aufnahmeteils strömen bzw. zirkulieren kann. Das entlang der Oberfläche des Aufnahmeteils strömende bzw. zirkulierende Kühlmittel kann sonach möglichst nah an eine innerhalb des Aufnahmeraums angeordnete, zu kühlende(n) Energiespeicherkomponente(n) gebracht werden, so dass ein guter Wärmeaustausch zwischen dem Kühlmittel und der zu kühlenden Energiespeicherkomponente(n) und somit eine hohe Kühleffizienz ermöglicht ist.

Die von der Kühlmittelkanalstruktur umfassten respektive durch die Kühlmittelkanalstruktur begrenzten Kühlmittelkanäle können, je nach Art des durch diese strömenden bzw. zirkulierenden Kühlmittels, d. h. insbesondere, ob es sich um ein gasförmiges oder flüssiges Kühlmittel handelt, offen oder geschlossen sein. Bei einer offenen Ausführung kann das Kühlmittel aus der Kühlmittelkanalstruktur in den Aufnahmeraum treten und so unmittelbar an die zu kühlenden Energiespeicherkomponenten gelangen. Die offene Ausführung der Kühlmittelkanalstruktur respektive der Kühlmittelkanäle wird bevorzugt bei Verwendung eines gasförmigen Kühlmittels vorgesehen. Bei dem gasförmigen Kühlmittel kann es sich beispielsweise um entsprechend temperiertes Kohlendioxid handeln. Dagegen ist das Kühlmittel bei einer geschlossenen Ausführung räumlich von den zu kühlenden Energiespeicherkomponenten getrennt, so dass es nicht unmittelbar an die zu kühlenden Energiespeicherkomponenten gelangen kann. Die geschlossene Ausführung der Kühlmittelkanalstruktur respektive der Kühlmittelkanäle wird bevorzugt bei Verwendung eines flüssigen Kühlmittels vorgesehen. Bei dem flüssigen Kühlmittel kann es sich beispielsweise um entsprechend temperiertes Flüssigkeit, wie z. B. Wasser, eine wässrige Lösung oder Öl, handeln.

Grundsätzlich ist es denkbar, dass die gesamte Oberfläche des Aufnahmeteils mit einer entsprechenden Kühlmittelkanalstruktur versehen ist. Denkbar ist es jedoch auch, dass nur bestimmte Bereiche der Oberfläche des Aufnahmeteils mit einer entsprechenden Kühlmittelkanalstruktur versehen sind. Die Kühlmittelkanalstruktur kann auch in mehrere separate, jeweils unterschiedliche Bereiche der Oberfläche des Aufnahmeteils abdeckende Kühlmittelkanäle aufgeteilt sein. In allen Fällen kommunizieren die der Kühlmittelkanalstruktur zugehörigen Kühlmittelkanäle mittelbar oder unmittelbar, d. h. insbesondere über mit diesen kommunizierende weitere Kühlmittelkanäle, mit einem Kühlmitteleinlass und einem Kühlmittelauslass. Dabei ist es insbesondere zweckmäßig, wenn die Anordnung der Kühlmittelkanäle derart ist, dass die Strömung des durch diese strömenden Kühlmittels zumindest abschnittsweise gegenläufig ist. Für alle Varianten gilt, dass die Kühlmittelkanalstruktur respektive die dieser zugehörigen Kühlmittelkanäle vorzugsweise mäanderartig verlaufen.

Grundsätzlich kommuniziert die Kühlmittelkanalstruktur sonach mit zumindest einem Kühlmitteleinlass und zumindest einem Kühlmittelauslass, über welche ein Kühlmittel in die Kühlmittelkanalstruktur eingebracht bzw., insbesondere nach Durchlaufen der Kühlmittelkanalstruktur, aus der Kühlmittelkanalstruktur entfernt werden kann.

Die Anordnung des Kühlmitteleinlasses, des Kühlmittelauslasses wie auch der mit diesen kommunizierenden Kühlmittelkanalstruktur ist derart gewählt, dass sich für sämtliche zu kühlenden, in das Aufnahmeteil aufzunehmenden oder aufgenommenen Energiespeicherkomponenten eine möglichst homogene Kühlung ergibt. Dies kann beispielsweise dadurch erreicht werden, dass der Kühlmitteleinlass und der Kühlmittelauslass an einer mittigen Position relativ zu einer Längsachse des Aufnahmeteils angeordnet sind. In dieser Anordnung tritt Kühlmittel mit einer niedrigen Temperatur mittig in die Kühlmittelkanalstruktur ein und nach Durchlaufen der Kühlmittelkanalstruktur erwärmtes Kühlmittel mit einer im Vergleich hohen Temperatur tritt mittig aus der Kühlmittelkanalstruktur aus. Derart ist es möglich, die vergleichsweise geringe Kühlwirkung des nach Durchlaufen der Kühlmittelkanalstruktur erwärmten Kühlmittels auszugleichen, da dieses in seinem Austrittsbereich zumindest abschnittsweise benachbart, insbesondere parallel, zu dem Eintrittsbereich des noch nicht erwärmten Kühlmittels verläuft.

Die Ausbildung der Kühlmittelkanalstruktur in der Oberfläche des Aufnahmeteils kann über unterschiedliche technische Ansätze erfolgt sein. Einerseits kann die Kühlmittelkanalstruktur im Rahmen der Formgebung des Aufnahmeteils, d. h. insbesondere eines formgebenden Schritts während der Herstellung des Aufnahmeteils, erfolgt sein. Diese Variante betrifft insbesondere Aufnahmeteile, welche über Gießverfahren, wie z. B. Spritzgießverfahren, d. h. aus gießfähigen, insbesondere spritzgießfähigen, Materialien hergestellt sind. Denkbar ist in diesem Zusammenhang die Ausbildung des Aufnahmeteils aus einem spritzgießfähigen thermoplastischen Kunststoffmaterial, wie z. B. ABS, PE, PP, oder einem gießfähigen duroplastischen Kunststoffmaterial. In beiden Fällen ist es denkbar, dass das Kunststoffmaterial mit Verstärkungsfasern, wie z. B. Aramid-, Glas- oder Kohlefasern, gefüllt ist. Das Aufnahmeteil kann alternativ auch aus einem (spritz)gießfähigen Metall, wie z. B. Aluminium oder Magnesium, gebildet sein.

Andererseits kann die Ausbildung der Kühlmittelkanalstruktur in der Oberfläche des Aufnahmeteils im Rahmen einer mechanischen Bearbeitung bzw. eines Materialabtrags, d. h. z. B. durch Spanen, allgemein spanabhebende Verfahren, Erodieren etc., erfolgt sein. Die Ausbildung der Kühlmittelkanalstruktur kann sich sonach an die eigentliche Herstellung des Aufnahmeteils angeschlossen haben. Die Materialwahl für das Aufnahmeteil schränkt sich in dieser Ausführungsform nur dadurch ein, dass das für die Ausbildung des Aufnahmeteils gewählte Material sich entsprechend bearbeiten lassen sollte. Das Aufnahmeteil kann auch in dieser Ausführungsform gleichermaßen aus einem Kunststoffmaterial oder einem Metall gebildet sein.

Die geometrische Gestalt, d. h. insbesondere der Querschnitt, der Kühlmittelkanäle ist grundsätzlich frei wählbar. Beispielsweise können die Kühlmittelkanäle einen halbkreisförmigen, V- oder U-förmigen Querschnitt aufweisen. Der Querschnitt der Kühlmittelkanäle kann sich bezogen auf deren Erstreckungslänge abschnittsweise ändern bzw. unterschiedlich sein.

Die geometrische Gestalt des Aufnahmeteils ist grundsätzlich frei wählbar respektive im Hinblick auf eine für die gesamte Aufnahmevorrichtung vorzusehende Anwendung bzw. Einbausituation, d. h. z. B. eine Einbausituation in einem Kraftfahrzeug, zu wählen. Zweckmäßig ist jedoch eine Ausführung des Aufnahmeteils mit einer trog- oder wannenartigen Gestalt vorgesehen. Das Aufnahmeteil weist sonach bevorzugt eine Grundfläche mit davon winklig, insbesondere rechtwinklig, abragenden Rändern auf. Die Form der Grundfläche ist wiederum frei wählbar, d. h. insbesondere im Hinblick auf eine für die gesamte Aufnahmevorrichtung vorzusehende Anwendung bzw. Einbausituation zu wählen. Die Grundfläche sowie insbesondere auch die Höhe der von der Grundfläche abragenden Ränder definieren das Volumen des von dem Aufnahmeteil begrenzten Aufnahmeraums. Die Höhe der Ränder des Aufnahmeteils kann als Maß dafür aufgefasst werden, zu welchem Anteil das Aufnahmeteil den Aufnahmeraum begrenzt. Grundsätzlich ist es also denkbar, dass das Aufnahmeteil den Aufnahmeraum vollständig begrenzt, so dass, um den Aufnahmeraum vollständig abzuschließen, nurmehr ein Deckel- oder Verschlussteil auf dieses aufzusetzen ist. Wie sich im Weiteren noch ergibt, kann die Aufnahmevorrichtung jedoch weitere Aufnahmeteile umfassen, welche gemeinsam mit dem wannenartig gestalteten Aufnahmeteil den Aufnahmeraum begrenzen.

Wie erwähnt kann die Kühlmittelkanalstruktur respektive die dieser zugehörigen Kühlmittelkanäle geschlossen ausgeführt sein. Dies kann beispielsweise dadurch realisiert sein, dass die Kühlmittelkanalstruktur durch zumindest ein plattenförmiges Abdeckelement abgedeckt ist. Das plattenförmige Abdeckelement dichtet bzw. schließt die Kühlmittelkanäle sonach bezogen auf die Oberfläche des Aufnahmeteils nach oben ab. Die Abmessungen und die Form des plattenförmigen Abdeckelements sind typischerweise an die Abmessungen und die Form des Aufnahmeteils, d. h. insbesondere an die Abmessungen und die Form der Grundfläche des Aufnahmeteils, angepasst, so dass das Abdeckelement in das Aufnahmeteil derart einsetzbar ist, dass es zumindest einen Teil der Kühlmittelkanalstruktur überdeckt. Insbesondere wird dabei der Bereich der Kühlmittelkanalstruktur überdeckt, in welchem im Weiteren die Energiespeicherkomponenten anzuordnen bzw. angeordnet sind. Bei dem plattenförmigen Abdeckelement kann es sich beispielsweise um eine ebene Platte aus einem Kunststoffmaterial oder Metall handeln. Die Ausführung aus Metall ist deshalb bevorzugt, da Metall im Vergleich eine bessere thermische Leitfähigkeit aufweist, was den Wärmeübergang von den zu kühlenden Energiespeicherkomponenten auf das Abdeckelement und das innerhalb der Kühlmittelkanalstruktur strömende Kühlmittel erleichtert.

Der wenigstens eine Kühlmitteleinlass und der wenigstens eine Kühlmittelauslass sind typischerweise in dem plattenförmigen Abdeckelement ausgebildet. Der wenigstens eine Kühlmitteleinlass wie auch der wenigstens eine Kühlmittelauslass sind beispielsweise als, insbesondere integral mit dem plattenförmigen Abdeckelement ausgeführte, Anschlussstutzen gebildet.

Das plattenförmige Abdeckelement ist mit der Oberfläche des Aufnahmeteils zweckmäßig über zumindest einen Verbindungspunkt verbunden. Selbstverständlich ist auch eine teil- oder vollflächige Verbindung des Abdeckelements mit der Oberfläche des Aufnahmeteils möglich. Die Verbindung, d. h. insbesondere die Ausbildung der Verbindungspunkte, kann z. B. über Kleben oder Schweißen erfolgen. Denkbar sind auch mechanische Verbindungsarten, wie z. B. Bördeln, Nieten, Schrauben, um eine Verbindung zwischen dem Abdeckelement und der Oberfläche des Aufnahmeteils herzustellen.

In vorteilhafter Weiterbildung der Erfindung ist vorgesehen, dass der Kühlmitteleinlass und der Kühlmittelauslass in einem separaten, von dem den Aufnahmeraum begrenzenden Bereichen räumlich getrennt angeordneten Bereich des plattenförmigen Abdeckelements angeordnet sind. Hierdurch kann sichergestellt werden, dass der Kühlmitteleinlass und der Kühlmittelauslass in einem Bereich des plattenförmigen Abdeckelements angeordnet sind, welcher regelmäßig frei von den den Aufnahmeraum begrenzenden Bereichen des Aufnahmeteils entfernt liegt, so dass dieser auch bei einem Verschluss des Aufnahmeraums über ein Deckel- oder Verschlusselement frei liegt und daher gut zugänglich ist.

Wie erwähnt kann das Aufnahmeteil z. B. aus einem Kunststoffmaterial oder Metall gebildet sein. Beide Materialien bzw. Materialgruppen zeichnen sich durch spezifische Vorteile aus. So bietet ein Kunststoffmaterial z. B. eine vergleichsweise hohe thermische wie auch elektrische Isolierung. Dagegen bietet ein Metall z. B. eine vergleichsweise hohe mechanische Stabilität. Die tatsächliche Materialwahl ist daher in Abhängigkeit der an die Aufnahmevorrichtung tatsächlich gestellten Anforderungen vorzunehmen. Hierbei ist insbesondere auch die Verbausituation der Aufnahmevorrichtung in einem größeren baulichen Zusammenhang, wie z. B. einem Kraftfahrzeug, zu beachten.

Erfindungsgemäß bildet das Aufnahmeteil eine Bodenfläche der Aufnahmevorrichtung. Es ist in dieser Ausführungsform ferner ein mehrere, den Aufnahmeraum ebenfalls begrenzende Seitenflächen der Aufnahmevorrichtung bildendes rahmenartiges weiteres Aufnahmeteil vorgesehen, in welchem mehrere Aufnahmeabteile zur passgenauen, gegebenenfalls sogar formschlüssigen, Aufnahme wenigstens einer Energiespeicherkomponente, insbesondere wenigstens einer Energiespeicherzelle und/oder einer mit wenigstens einer Energiespeicherzelle elektrisch zu verbindender oder verbundener elektronischer Komponente, ausgebildet sind. Das weitere Aufnahmeteil kann als Tragstruktur für entsprechende in die Aufnahmevorrichtung einzusetzende Energiespeicherkomponenten aufgefasst werden. Die Aufnahmeabteile sind in Anzahl, Abmessungen und Form an die Anzahl, Abmessungen und Formen der jeweiligen in diese einzusetzenden Energiespeicherkomponenten angepasst.

Die in dem weiteren Aufnahmeteil gebildeten Aufnahmeabteile sind typischerweise durch, insbesondere lotrecht zueinander verlaufende, Traversen bzw. Stege gebildet. Die jeweiligen Aufnahmeabteile können in vertikaler Richtung typischerweise beidseits offen sein, so dass es sich bei den Aufnahmeabteilen typischerweise um vertikale Durchbrechungen bzw. Öffnungen des Aufnahmeteils handelt. Denkbar ist es jedoch auch, dass die oder bestimmte Aufnahmeabteile in vertikaler Richtung nicht vollständig durchbrochen sind, sondern vielmehr in Form von Ausnehmungen oder Vertiefungen vorliegen. Die Bodenfläche dieser Ausnehmungen kann mit der Bodenfläche des weiteren Aufnahmeteils, worunter diejenige Fläche des weiteren Aufnahmeteils zu verstehen ist, mit der dieses auf einem horizontalen Untergrund aufliegt, fluchten. Denkbar ist es jedoch auch, dass die Bodenfläche dieser Ausnehmungen im Vergleich zu der Bodenfläche des weiteren Aufnahmeteils höher liegt. Bei dem weiteren Aufnahmeteil handelt es sich, wie erwähnt, sonach typischerweise um ein rahmenartiges Bauteil. Das weitere Aufnahmeteil bildet, wie erwähnt, eine Halte- und/oder Tragstruktur für die in diesem aufzunehmenden Energiespeicherkomponenten, bei welchen es sich typischerweise um Energiespeicherzellen und mit den Energiespeicherzellen verbundene elektrische und/oder elektronische Bauteile, wie z. B. eine den Lade- und Entladebetrieb der Energiespeicherzellen steuernde Lade- oder Steuereinrichtungen, handelt.

Bei dem weiteren Aufnahmeteil handelt es sich typischerweise um ein metallisches Druckgussteil. Entsprechend lässt sich das weitere Aufnahmeteil bevorzugt aus Materialien wie Aluminium, Magnesium oder Titan bilden. Metallische Druckgussteile bieten hervorragende mechanische Eigenschaften, so dass durch die Ausbildung des weiteren Aufnahmeteils als Druckgussteil die mechanische Stabilität der Aufnahmevorrichtung insgesamt erhöht werden kann. Selbstverständlich ist es grundsätzlich auch denkbar, dass weitere Aufnahmeteil nicht als metallisches Druckgussteil, sondern beispielsweise als Bauteil aus Keramik oder Kunststoff auszuführen.

Um den durch das Aufnahmeteil sowie gegebenenfalls das weitere Aufnahmeteil begrenzten Aufnahmeraum vollständig abzuschließen bzw. abzudichten, kann ein Deckel- oder Verschlussteil, über welches der Aufnahmeraum zumindest nach einer offenen Seite hin verschließbar ist, vorgesehen sein. Durch die korrekte Anordnung bzw. Verbindung des Verschlussteils mit dem oder den Aufnahmeteilen ist sonach eine Abdichtung sowie ein Schutz der in dem Aufnahmeraum aufgenommenen Energiespeicherkomponenten vor mechanischen wie auch korrosiven Einflüssen gegeben.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1 - 5: je eine Aufnahmevorrichtung gemäß einer beispielhaften Ausführungsform der Erfindung;
- Fig. 6: eine Aufsicht auf die in Fig. 1 gezeigte Aufnahmevorrichtung;
- Fig. 7: einen Schnitt entlang der in Fig. 6 gezeigten Schnittlinien VI - VI; und
- Fig. 8: eine Einzelansicht des in den Fig. 3, 4 gezeigten weiteren Aufnahmeteils.

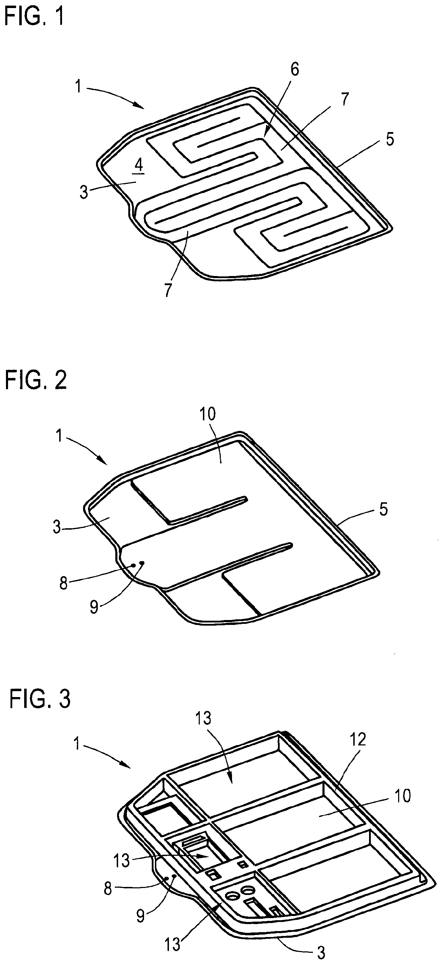

Fig. 1 zeigt eine Aufnahmevorrichtung 1 gemäß einer beispielhaften Ausführungsform der Erfindung. Die Aufnahmevorrichtung 1 dient der Aufnahme von Energiespeicherkomponenten 2. Anhand von Fig. 1 ist ersichtlich, dass die Aufnahmevorrichtung 1 ein Aufnahmeteil 3 aufweist. Das Aufnahmeteil 3 weist eine wannenartige Gestalt mit einer Grundfläche 4 und von der Grundfläche 4 lotrecht abragenden Rändern 5 auf. Derart ist in dem Aufnahmeteil 3 ein Teil eines der Aufnahmevorrichtung 1 zugehörigen Aufnahmeraums zur Aufnahme entsprechender Energiespeicherkomponenten 2 gebildet. Das Aufnahmeteil 3 begrenzt den Aufnahmeraum der Aufnahmevorrichtung 1 daher abschnittsweise. Bei dem Aufnahmeteil 3 handelt es sich um ein aus einem mit Verstärkungsfasern, insbesondere Glasfasern, gefüllten thermoplastischen Kunststoffmaterial, wie z. B. PP, über ein Spritzgießverfahren gebildetes Bauteil.

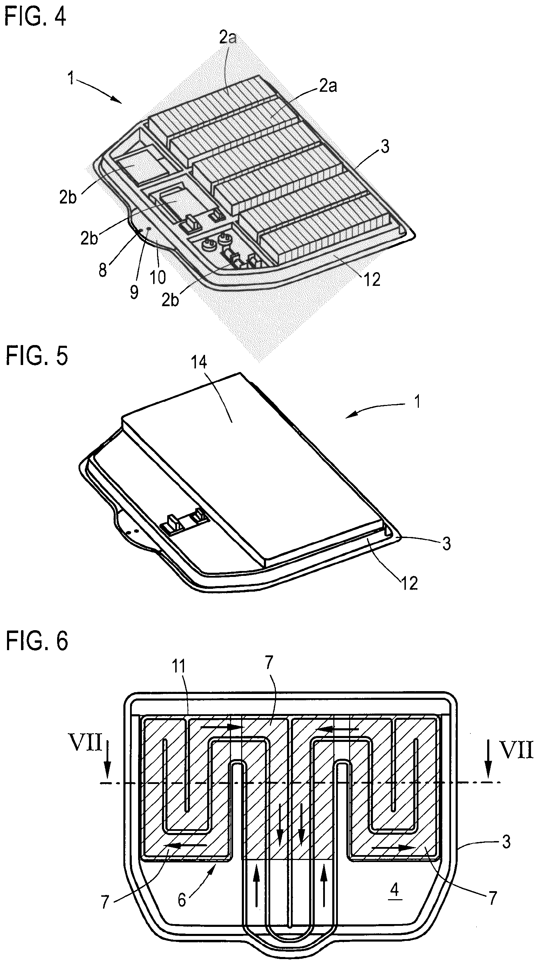

Wie sich anhand der Fig. 4, 5 und 8 ergibt, dient die Aufnahmevorrichtung 1 der Aufnahme unterschiedlicher Energiespeicherkomponenten 2. Bei den Energiespeicherkomponenten 2 handelt es sich insbesondere um Energiespeicherzellen 2a sowie elektronische Komponenten 2b, wie z. B. eine den Lade- und Entladebetrieb der Energiespeicherzellen 2a steuernde Lade- bzw. Steuerungselektronik. Sämtliche Energiespeicherkomponenten 2 bilden einen elektrischen Energiespeicher bzw. eine Batterie. Die Aufnahmevorrichtung 1 kann als Gehäuse für den Energiespeicher aufgefasst werden. Die Aufnahmevorrichtung 1 wird typischerweise in einem Kraftfahrzeug verbaut. Die innerhalb der Aufnahmevorrichtung 1 aufgenommenen Energiespeicherkomponenten 2, d. h. insbesondere der durch diese gebildete Energiespeicher, dient der Versorgung kraftfahrzeugseitiger elektrischer Hochvolt- und/oder Niedervoltverbraucher mit elektrischer Energie.

Wie sich anhand der Fig. 1, 5 und 6 erkennen lässt, ist in der Oberfläche des Aufnahmeteils 3, d. h. insbesondere der Oberfläche der Grundfläche 4 des Aufnahmeteils 3, eine Kühlmittelkanalstruktur 6 gebildet. Die Kühlmittelkanalstruktur 6 umfasst mehrere, durch nut- oder rinnenartige längliche Vertiefungen der Oberfläche gebildete, mäanderartig verlaufende Kühlmittelkanäle 7. Die Ausbildung der Kühlmittelkanalstruktur 6 bzw. der Kühlmittelkanäle 7 kann im Rahmen der Herstellung des Aufnahmeteils 3 erfolgt sein. Denkbar ist es grundsätzlich auch, die Kühlmittelkanalstruktur 6 bzw. die Kühlmittelkanäle 7 durch materialabtragende Verfahren in die Oberfläche des Aufnahmeteils 3 einzubringen.

Wie sich im Weiteren ergibt, strömt durch die in der Oberfläche der Grundfläche 4 des Aufnahmeteils 3 gebildete Kühlmittelkanalstruktur 6 ein Kühlmittel, d. h. z. B. ein Kühlgas oder eine Kühlflüssigkeit, insbesondere Wasser bzw. Gemische aus Wasser und anderen Flüssigkeiten, wie z. B. Glykol. Die Einbringung des Kühlmittels erfolgt über einen in einem von einem mittigen Abschnitt der Grundfläche 4 abgehenden Bereich eines plattenförmigen Abdeckelements 10 angeordneten Kühlmitteleinlass 8. Im Bereich des Kühlmitteleinlasses 8 ist ferner ein Kühlmittelauslass 9 vorgesehen, über welchen das durch die Kühlmittelkanalstruktur 6 geströmte Kühlmittel aus der Kühlmittelkanalstruktur 6 und somit aus dem Aufnahmeteil 3 austreten kann. Bei dem Kühlmitteleinlass 8 wie auch dem Kühlmittelauslass 9 handelt es sich jeweils um Anschlussstutzen, welche integral mit dem plattenförmigen Abdeckelement 10 ausgeführt sein können. Insgesamt ist daher ein kreislaufartiges Durchströmen der Kühlmittelkanalstruktur 6 mit einem Kühlmittel realisiert, so dass eine hinreichende Kühlung der sich im Betrieb der in der Aufnahmevorrichtung 1 aufgenommenen Energiespeicherkomponenten 2 und somit des durch diese gebildeten Energiespeichers sichergestellt ist.

Die Strömung des durch die Kühlmittelkanäle 7 bzw. durch die Kühlmittelkanalstruktur 6 strömenden Kühlmittels ist anhand von Fig. 6 erkennbar. Die gegenläufige Strömung des Kühlmittels innerhalb der Kühlmittelkanäle 7 bzw. der Kühlmittelkanalstruktur 6 ist durch jeweilige Pfeile angedeutet.

Die Anordnung des Kühlmitteleinlasses 8 und des Kühlmittelauslasses 9 sowie die symmetrische Anordnung und der Verlauf der Kühlmittelkanäle 7 ist derart gewählt, dass eine homogene Kühlung der zu kühlenden Energiespeicherkomponenten 2 sichergestellt ist. In Fig. 6 sind durch schraffierte Flächen beispielhaft Anordnungsbereiche von in die Aufnahmevorrichtung 1 aufzunehmenden Energiespeicherzellen 2a angedeutet. Durch die anhand der Pfeile erkennbare gegenläufige Strömung des Kühlmittels durch die Kühlmittelkanalstruktur 6 werden die Energiespeicherzellen 2a daher homogen gekühlt. Die in Fig. 6 im Bereich der mittleren schraffierten Fläche angeordneten Energiespeicherzellen 2a werden hälftig mit dem Kühlmittel mit der vergleichsweise niedrigen Eintrittstemperatur und mit Kühlmittel mit der vergleichsweise warmen Austrittstemperatur gekühlt. Für die in Fig. 6 im Bereich der oberen und unteren schraffierten Fläche angeordneten Energiespeicherzellen 2a reduziert sich die Temperaturdifferenz der gegenläufigen Kühlmittelströme, so dass sich im Mittel eine weitgehend homogene Kühlung sämtlicher Energiespeicherzellen 2a realisieren lässt.

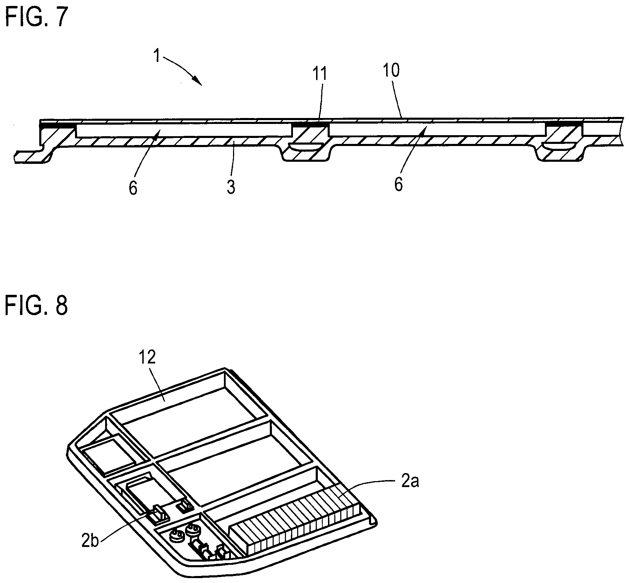

Damit das in den Kühlmittelkanälen 7 und somit durch die Kühlmittelkanalstruktur 6 strömende Kühlmittel nicht innerhalb des Aufnahmeteils 3 aus den Kühlmittelkanälen 7 respektive der Kühlmittelkanalstruktur 6 austreten und somit in Kontakt mit den zu kühlenden Energiespeicherkomponenten 2 gelangen kann, sind die Kühlmittelkanäle 7 oberseitig über das bereits erwähnte plattenförmige Abdeckelement 10 in Form einer aus einem thermisch gut leitfähigen Metall, wie z. B. Aluminium, gebildeten, metallischen Platte abgedeckt (vgl. Fig. 2, 7). Das Abdeckelement 10 ist z. B. über eine Klebeverbindung (vgl. Fig. 7, Klebebereiche 11) fest mit der Grundfläche 4 des Aufnahmeteils 3 verbunden.

Bei dem in Fig. 3 gezeigten Ausführungsbeispiel ist auf das in Fig. 2 gezeigte Ausführungsbeispiel, d. h. das wannenartige Aufnahmeteil 3 ein weiteres Aufnahmeteil 12 aufgesetzt. Das Aufnahmeteil 3 bildet daher eine Bodenfläche bzw. den Boden der Aufnahmevorrichtung 1, während das weitere Aufnahmeteil 12 entsprechende Seitenflächen der Aufnahmevorrichtung 1 bildet. Mithin begrenzt das erste Aufnahmeteil 3 den Aufnahmeraum der Aufnahmevorrichtung 1 insbesondere im Bereich des Bodens, während das weitere Aufnahmeteil 12 den Aufnahmeraum der Aufnahmevorrichtung 1 insbesondere seitlich begrenzt. Bei dem weiteren Aufnahmeteil 12 handelt es sich um ein metallisches Druckgussteil aus Aluminium oder Magnesium respektive entsprechenden metallischen Legierungen. Das weitere Aufnahmeteil 12 ist daher mechanisch äußerst stabil und bietet sonach einen guten Schutz der in diesem anzuordnenden Energiespeicherkomponenten 2 gegen mechanische Beanspruchungen.

Das weitere Aufnahmeteil 12 weist eine rahmenartige Gestalt auf und kann als Tragstruktur für die in diesem aufzunehmenden Energiespeicherkomponenten 2 aufgefasst werden (vgl. Fig. 8). Die rahmenartige Gestalt des weiteren Aufnahmeteils 12 ergibt sich durch entsprechende, in dem weiteren Aufnahmeteil 12 gebildete Aufnahmeabteile 13. Die jeweils als vertikale Durchbrechung der sich horizontal erstreckenden Grundebene des weiteren Aufnahmeteils 12 gebildeten Aufnahmeabteile 13 dienen jeweils der passgenauen, gegebenenfalls sogar formschlüssigen, Aufnahme einer oder mehrerer bestimmter Energiespeicherkomponenten 2, d. h. insbesondere wenigstens einer Energiespeicherzelle 2a und/oder wenigstens einer elektronischen Komponente 2b. Mithin sind die Abmessungen der jeweiligen Aufnahmeabteile 13 an die Abmessungen von jeweiligen in diesen aufzunehmenden Energiespeicherkomponenten 2 angepasst. Die in Fig. 3 rechts einer Mitteltraverse liegenden, im Vergleich größeren Aufnahmeabteile 13 dienen der Aufnahme von Energiespeicherzellen 2a, die in Fig. 3 links der Mitteltraverse liegenden, im Vergleich kleineren Aufnahmeabteile 13 dienen der Aufnahme elektronischer Komponenten 2b.

Die Anordnung entsprechender Energiespeicherkomponenten 2 innerhalb der Aufnahmeabteile 13 und somit die Bestückung des weiteren Aufnahmeteils 12 und somit der Aufnahmevorrichtung 1 mit entsprechenden Energiespeicherkomponenten 2 ist in Fig. 4 gezeigt. Aus Fig. 4 ergibt sich ferner, dass die Anordnung der Aufnahmeabteile 13 derart gewählt ist, dass sämtliche in den Aufnahmeabteilen 13 anzuordnenden Energiespeicherkomponenten 2, welche betriebsbedingt einen Kühlbedarf haben, bodenseitig unmittelbar auf dem Abdeckelement 10 aufliegen, so dass über das Abdeckelement 10 eine Wärmeabgabe auf das in der Kühlmittelkanalstruktur 6 respektive den dieser zugehörigen Kühlmittelkanälen 7 strömende Kühlmittel möglich ist.

Anhand von Fig. 5 ist ersichtlich, dass durch die Anordnung eines Verschlussteils 14 auf die in Fig. 4 gezeigte Aufnahmevorrichtung 1 eine vollkommene Abdeckung und somit Umschließung der innerhalb des Aufnahmeraums respektive den Aufnahmeabteilen 13 angeordneten Energiespeicherkomponenten 2 möglich ist. Die innerhalb der Aufnahmevorrichtung 1 aufgenommenen Energiespeicherkomponenten 2 respektive der durch diese gebildete elektrische Energiespeicher ist somit nach Außen hin, d. h. gegenüber äußeren, insbesondere mechanischen und korrosiven, Einflüssen vollkommen abgedichtet und geschützt.

Die Verbindung des Aufnahmeteils 3, des weiteren Aufnahmeteils 12 sowie des Verschlussteils 14 erfolgt über ein Verkleben, so dass eine hinreichende, insbesondere tauchsichere, Abdichtung der in dem innerhalb der Aufnahmevorrichtung 1 gebildeten Aufnahmeraum befindlichen Energiespeicherkomponenten 2 gegeben ist. Die Verklebung erfolgt mit einem Schmelzkleber, welcher über Einbringung von Temperatur, d. h. z. B. mittels eines Heißdrahtes, gelöst werden kann. Derart können Service- oder Reparaturarbeiten z. B. an den Energiespeicherkomponenten 2 durchgeführt werden.

Lediglich im Bereich der elektrische Anschlüsse, d. h. insbesondere einen Hochvoltanschluss und einen Niedervoltanschluss, darstellenden, in Fig. 5 erkennbaren elektronischen Komponenten 2b ist eine Aussparung innerhalb des Verschlussteils 14 vorgesehen, so dass eine ordnungsgemäße elektrische Kontaktierung bzw. Verbindung der Energiespeicherkomponenten 2 bzw. des durch diese gebildeten Energiespeichers mit einer entsprechenden Anwendung, d. h. insbesondere einem Kraftfahrzeug respektive entsprechender kraftfahrzeugseitiger elektrischer Verbraucher, möglich ist.

Anhand von Fig. 5 ist ferner ersichtlich, dass der Kühlmitteleinlass 8 und der Kühlmittelauslass 9 in einem separaten, von dem den Aufnahmeraum begrenzenden Bereichen räumlich getrennt angeordneten Bereich des plattenförmigen Abdeckelements 10 angeordnet sind. Der Kühlmitteleinlass 8 und der Kühlmittelauslass 9 liegen daher frei, so dass diese gut zugänglich sind.

Anhand der Fig. 1 - 5 ist erkennbar, dass sich die Aufnahmevorrichtung 1 aus mehreren Bauteilen, d. h. dem Aufnahmeteil 3, dem weiteren Aufnahmeteil 12 sowie einem Verschlussteil 14 baukastenartig zusammensetzen lässt.

Wesentliche Vorteile der in den Fig. gezeigten Aufnahmevorrichtung 1 sind darin zu sehen, dass diese durch ihre mechanische Stabilität auch in mechanisch beanspruchten Bereichen eines Kraftfahrzeugs, wie z. B. im Bereich des Unterbodens, angeordnet bzw. verbaut werden kann. Durch die durch die in das Aufnahmeteil 3 unmittelbar integrierte Kühlmittelkanalstruktur 6 ist eine hinreichende Kühlung sämtlicher Energiespeicherkomponenten 2, insbesondere auch entsprechender elektronischer Komponenten 2b, sichergestellt. Sämtliche elektrischen bzw. elektronischen Anschlüsse wie auch Anschlüsse für die Zu- und Abführung eines Kühlmittels sind Bauraum sparend und gut zugänglich in die Aufnahmevorrichtung 1 integriert.

## Patentansprüche

1. Aufnahmevorrichtung (1) zur Aufnahme wenigstens einer Energiespeicherkomponente (2), umfassend wenigstens ein einen Aufnahmeraum zur Aufnahme der Energiespeicherkomponente (2) zumindest abschnittsweise begrenzendes Aufnahmeteil (3), wobei in der Oberfläche des Aufnahmeteils (3) zumindest abschnittsweise eine wenigstens einen Kühlmittelkanal (7) umfassende Kühlmittelkanalstruktur (6) ausgebildet ist, welche mit wenigstens einem Kühlmitteleinlass (8) und mit wenigstens einem Kühlmittelauslass (9) kommuniziert, wobei das Aufnahmeteil (3) eine Bodenfläche der Aufnahmevorrichtung (1) bildet und ein mehrere, den Aufnahmeraum ebenfalls begrenzende Seitenflächen der Aufnahmevorrichtung (1) bildendes rahmenartiges weiteres Aufnahmeteil (12) vorgesehen ist, in welchem mehrere Aufnahmeabteile (13) zur passgenauen Aufnahme wenigstens einer Energiespeicherkomponente (2) ausgebildet sind, wobei auf einer dem wenigstens einen Kühlmitteleinlass (8) und dem wenigstens einen Kühlmittelauslass (9) zugewandten Seite einer Mitteltraverse des weiteren Aufnahmeteils (12) wenigstens ein Aufnahmeabteil (13) zur Aufnahme wenigstens einer mit einer Energiespeicherzelle (2a) elektrisch zu verbindender oder verbundener elektronischer Komponente (2b) ausgebildet ist und wobei auf einer dem wenigstens einen Kühlmitteleinlass (8) und dem wenigstens einen Kühlmittelauslass (9) abgewandten Seite der Mitteltraverse des weiteren Aufnahmeteils (12) wenigstens ein Aufnahmeabteil (13) zur Aufnahme wenigstens einer. Energiespeicherzelle (2a) ausgebildet ist.

2. Aufnahmevorrichtung nach Anspruch 1,
**dadurch gekennzeichnet,**
**dass** die Kühlmittelkanalstruktur (6) im Rahmen der Formgebung und/oder eines Materialabtrags des Aufnahmeteils (3) gebildet ist.

3. Aufnahmevorrichtung nach Anspruch 1 oder 2,
**dadurch gekennzeichnet,**
**dass** das Aufnahmeteil (3) eine wannenartige Gestalt aufweist.

4. Aufnahmevorrichtung nach Anspruch 3,
**dadurch gekennzeichnet,**
**dass** die wannenartige Gestalt durch von einer Grundfläche (4) des Aufnahmeteils (4) winklig abragende Ränder (5) gebildet ist.

5. Aufnahmevorrichtung nach einem der vorangehenden Ansprüche,
**dadurch gekennzeichnet,**
**dass** die Kühlmittelkanalstruktur (6) durch zumindest ein plattenförmiges Abdeckelement (10) abgedeckt ist.

6. Aufnahmevorrichtung nach Anspruch 5,
**dadurch gekennzeichnet,**
**dass** das Abdeckelement (10) mit der Oberfläche des Aufnahmeteils (3) über zumindest einen Verbindungspunkt (13) verbunden ist.

7. Aufnahmevorrichtung nach Anspruch 5 oder 6,
**dadurch gekennzeichnet,**
**dass** der Kühlmitteleinlass (8) und der Kühlmittelauslass (9) in einem separaten, von dem den Aufnahmeraum begrenzenden Bereichen räumlich getrennt angeordneten Bereich des Abdeckelements (10) ausgebildet ist.

8. Aufnahmevorrichtung nach einem der vorangehenden Ansprüche,
**dadurch gekennzeichnet,**
**dass** die Kühlmittelkanalstruktur (6) zumindest abschnittsweise mäanderartig entlang der Oberfläche des Aufnahmeteils (3) verlaufend ausgebildet ist.

9. Aufnahmevorrichtung nach einem der vorangehenden Ansprüche,
**dadurch gekennzeichnet,**
**dass** das Aufnahmeteil (3) aus einem Kunststoffmaterial oder Metall gebildet ist.

10. Aufnahmevorrichtung nach einem der vorangehenden Ansprüche,
**dadurch gekennzeichnet,**
**dass** die Abmessungen der jeweiligen Aufnahmeabteile (13) an die Abmessungen von jeweiligen in diesen aufzunehmenden Energiespeicherkomponenten (2) angepasst sind.

11. Aufnahmevorrichtung nach einem der vorangehenden Ansprüche ,
**dadurch gekennzeichnet,**
**dass** das weitere Aufnahmeteil (12) ein metallisches Druckgussteil ist.

12. Aufnahmevorrichtung nach einem der vorangehenden Ansprüche,
**gekennzeichnet durch**
ein Verschlussteil (14), über welches der Aufnahmeraum zumindest nach einer offenen Seite hin verschließbar ist.

## Claims

1. Receiving device (1) for receiving at least one energy storage component (2), comprising at least one receiving part (3) which delimits at least in sections a mounting frame for receiving the energy storage component (2), wherein a coolant channel structure (6) comprising at least in sections at least one coolant channel (7) is formed in the surface of the receiving part (3), which coolant channel structure communicates with at least one coolant inlet (8) and with at least one coolant outlet (9), wherein the receiving part (3) forms a base surface of the receiving device (1) and a frame-like additional receiving part (12) forming a plurality of side surfaces of the receiving device (1) that also delimit the mounting frame is provided, in which receiving part a plurality of receiving compartments (13) are formed for receiving at least one energy storage component (2) in an exact fit, wherein on a side of a central crossbeam of the additional receiving part (12) facing the at least one coolant inlet (8) and the at least one coolant outlet (9) at least one receiving compartment (13) is formed for receiving at least one electronic component (2b) connected or to be connected electrically to an energy storage cell (2a) and wherein on a side of the central crossbeam of the additional receiving part (12) facing away from the at least one coolant inlet (8) and the at least one coolant outlet (9) at least one receiving compartment (13) is formed for receiving at least one energy storage cell (2a).

2. Receiving device according to claim 1,
**characterised in that**
the coolant channel structure (6) is formed during a shaping and/or material removing processing of the receiving part (3).

3. Receiving device according to claim 1 or 2,
**characterised in that**
the receiving part (3) has a trough-like shape.

4. Receiving device according to claim 3,
**characterised in that**
the trough-like shape is formed by edges (5) that protrude at an angle from a base surface (4) of the receiving part (4).

5. Receiving device according to any of the preceding claims,
**characterised in that**
the coolant channel structure (6) is covered by at least one plate-shaped cover element (10).

6. Receiving device according to claim 5,
**characterised in that**
the cover element (10) is connected to the surface of the receiving part (3) via at least one connection point (13).

7. Receiving device according to claim 5 or 6,
**characterised in that**
the coolant inlet (8) and the coolant outlet (9) are formed in a separate region of the cover element (10) which is arranged spatially separate from the regions which delimit the mounting frame.

8. Receiving device according to any of the preceding claims,
**characterised in that**
the coolant channel structure (6) is designed so as to extend in a meandering manner at least in sections along the surface of the receiving part (3).

9. Receiving device according to any of the preceding claims,
**characterised in that**
the receiving part (3) is made from a plastic material or metal.

10. Receiving device according to any of the preceding claims,
**characterised in that**
the dimensions of the respective receiving compartments (13) are adapted to the dimensions of respective energy storage components (2) to be received in said receiving compartments.

11. Receiving device according to any of the preceding claims,
**characterised in that**
the additional receiving part (12) is a metallic die cast part.

12. Receiving device according to any of the preceding claims,
**characterised by**
a closure part (14), by means of which the mounting frame can be closed at least towards one open side.

## Revendications

1. Dispositif de logement (1) destiné à loger au moins un composant accumulateur d'énergie (2), comprenant au moins une partie de logement (3) délimitant au moins par section un espace de logement destiné à loger le composant accumulateur d'énergie (2), dans lequel dans la surface de la partie de logement (3) une structure de canal de moyen de refroidissement (6) comprenant au moins un canal de moyen de refroidissement (7) est réalisée au moins par section, laquelle communique avec au moins une entrée de moyen de refroidissement (8) et avec au moins une sortie de moyen de refroidissement (9), dans lequel la partie de logement (3) forme une surface de fond du dispositif de logement (1) et une autre partie de logement (12) de type cadre formant des surfaces latérales du dispositif de logement (1) délimitant aussi l'espace de logement est prévue, dans laquelle plusieurs compartiments de logement (13) sont réalisés pour le logement de façon précisément ajustée d'au moins un composant accumulateur d'énergie (2), dans lequel sur un côté tourné vers l'au moins une entrée de moyen de refroidissement (8) et l'au moins une sortie de moyen de refroidissement (9) d'une traverse médiane de l'autre partie de logement (12) au moins un compartiment de logement (13) est réalisé pour le logement d'au moins un composant électronique (2b) relié ou à relier électriquement à une cellule d'accumulateur d'énergie (2a) et dans lequel sur un côté éloigné de l'au moins une entrée de moyen de refroidissement (8) et de l'au moins une sortie de moyen de refroidissement (9) de la traverse médiane de l'autre partie de logement (12) au moins un compartiment de logement (13) est réalisé pour la logement d'au moins une cellule d'accumulateur d'énergie (2a).

2. Dispositif de logement selon la revendication 1,
**caractérisé en ce**
**que** la structure de canal de moyen de refroidissement (6) est formée dans le cadre de la mise en forme et/ou d'un enlèvement de matériau de la partie de logement (3).

3. Dispositif de logement selon la revendication 1 ou 2,
**caractérisé en ce**
**que** la partie de logement (3) présente une forme de type cuvette.

4. Dispositif de logement selon la revendication 3,
**caractérisé en ce**
**que** la forme de type cuvette est formée par des bords (5) faisant saillie de manière angulaire d'une surface de base (4) de la partie de logement (4).

5. Dispositif de logement selon l'une des revendications précédentes,
**caractérisé en ce**
**que** la structure de canal de moyen de refroidissement (6) est recouverte par au moins un élément de recouvrement (10) en forme de plaque.

6. Dispositif de logement selon la revendication 5,
**caractérisé en ce**
**que** l'élément de recouvrement (10) est relié à la surface de la partie de logement (3) par l'intermédiaire d'au moins un point de liaison (13).

7. Dispositif de logement selon la revendication 5 ou 6,
**caractérisé en ce**
**que** l'entrée de moyen de refroidissement (8) et la sortie de moyen de refroidissement (9) sont réalisées dans une zone de l'élément de recouvrement (10) séparée, agencée séparément dans l'espace des zones délimitant l'espace de logement.

8. Dispositif de logement selon l'une des revendications précédentes,
**caractérisé en ce**
**que** la structure de canal de moyen de refroidissement (6) est réalisée s'étendant au moins par section de façon sinueuse le long de la surface de la partie de logement (3).

9. Dispositif de logement selon l'une des revendications précédentes,
**caractérisé en ce**
**que** la partie de logement (3) est formée en un matériau plastique ou métal.

10. Dispositif de logement selon l'une des revendications précédentes,
**caractérisé en ce**
**que** les dimensions des compartiments de logement respectifs (13) sont adaptées aux dimensions de composants accumulateurs d'énergie (2) respectifs à loger dans ceux-ci.

11. Dispositif de logement selon l'une des revendications précédentes,
**caractérisé en ce**
**que** l'autre partie de logement (12) est une partie moulée par injection métallique.

12. Dispositif de logement selon l'une des revendications précédentes,
**caractérisé par**
une partie de fermeture (14) par l'intermédiaire de laquelle l'espace de logement peut être fermé au moins vis-à-vis d'un côté ouvert.
